# FASCICULE DE BREVET EUROPEEN

(11) **EP 0 663 323 B1**
(45) Date de publication et mention de la délivrance du brevet: **11.03.1998**
(21) Numéro de dépôt: 94403061.8
(22) Date de dépôt: 30.12.1994
(51) Int. Cl.: B60R 13/04

(54) **Profilé en polymère**
Leiste aus Polymeren
Polymer strip

(30) Priorité: 14.01.1994 FR 9400375
(43) Date de publication de la demande: 19.07.1995
(73) Titulaire: BTR SEALING SYSTEMS FRANCE, 92000 Nanterre (FR)
(72) Inventeur: Paul, Jean-Claude, F-27910 Perrier sur Andelle (FR)
(74) Mandataire: Jolly, Jean-Pierre

(56) Documents cités:
- WO-A-89/08569
- DE-A- 3 125 808
- GB-A- 2 210 625
- US-A- 3 811 989

## Description

La présente invention concerne un nouveau profilé en un matériau polymère, destiné à être fixé par clipsage sur la tête de plots rigides, notamment de carrosseries d'automobile.

Il existe de très nombreux types de profilés destinés à être fixés sur une carrosserie d'automobile, notamment par clipsage sur des têtes de plots rigides faisant saillie à la surface de cette carrosserie. De tels profilés sont utilisés, en particulier, pour des joints de double étanchéité de bas de caisse d'automobile ou pour des joints anti-salissure. Ils sont généralement réalisés par extrusion ou co-extrusion d'une ou de plusieurs matières thermoplastiques et ils peuvent éventuellement comporter une armature métallique noyée dans l'une des matières extrudées.

Les profilés connus de ce type sont habituellement en un matériau relativement dur, permettant de les clipser sous pression sur la tête de plots rigides à section en T, prévus dans ce but à la surface de la carrosserie d'automobile, sur la tôle de laquelle ils sont soudés.

Dans sa demande de brevet français N°93 00219, du 13 Janvier 1993, la Demanderesse a proposé dans ce but des profilés dans lesquels le corps du profilé est en un matériau polymère relativement souple, en élastomère par exemple, tandis que les parties destinées à être engagées par clipsage au-dessous de la tête des plots sont en un matériau polymère plus dur, par exemple à base de polyoléfine, réticulée ou non, et sont co-extrudées avec le corps du profilé.

Les profilés décrits dans cette demande antérieure comprennent :
- d'une part, un corps en une première matière polymère, ce corps comprenant deux parties tubulaires destinées à être placées de part et d'autre des plots, ces parties tubulaires étant réunies par une partie formant pont, destinée à être disposée au-dessus des têtes des plots, et
- d'autre part, attenantes chacune à une paroi souple de l'une des parties tubulaires et faisant saillie par rapport à celle-ci au-dessous de la partie formant pont, en une position telle qu'elles peuvent se clipser au-dessous de la tête des plots, deux lèvres en une seconde matière polymère d'une dureté plus élevée que celle de la première matière, le corps et les deux lèvres provenant d'une unique opération de co-extrusion.

Du fait que les lèvres destinées à être clipsées sont attenantes à une paroi souple d'une partie tubulaire, ces parois peuvent se déformer latéralement, lors de la mise en place du profilé sur les plots, ou s'écarter l'une de l'autre, pour reprendre ensuite leur position initiale par élasticité.

On connaît aussi, par US-A-3 811 989, un profilé en au moins un matériau polymère, destiné à être fixé par clipsage sur la tête de plots rigides à section en T, en particulier de plots faisant saillie à la surface d'une carrosserie d'automobile. Ce profilé comprend un corps à section en C en une première matière polymère, destiné à coiffer la tête des plots et, attenantes aux bords latéraux de ce corps, deux lèvres dures en une seconde matière polymère.

La présente invention vise à proposer des profilés dérivés de ceux dont on vient de rappeler les caractéristiques, mais qui ne comportent pas de parties tubulaires et sont plus faciles à réaliser.

L'invention a également pour but de proposer des profilés dérivés de ceux rappelés ci-dessus, mais qui, du fait de l'absence de parties tubulaires, ne se mettent pas en place sur des plots par déformation d'une paroi souple de ces parties, mais en exerçant une pression sur une partie formant pont disposée au-dessus des têtes des plots.

A cet effet, l'invention a pour objet un profilé en au moins un matériau polymère, destiné à être fixé par clipsage sur la tête de plots rigides à section en T, en particulier de plots faisant saillie à la surface d'une carrosserie d'automobile, ce profilé comprenant :
- d'une part, un corps en une première matière polymère, ce corps ayant une section en C et étant destiné à coiffer la tête des plots, avec la partie concave du C tournée vers les plots, et
- d'autre part, attenantes à chacune des extrémités des tranches du corps à section en C et destinées à faire saillie en direction l'une de l'autre au-dessous de la partie concave du C, en vue d'être engagées sous la tête des plots, deux lèvres dures en une seconde matière polymère thermoplastique,
le corps et les deux lèvres dures provenant d'une unique opération de co-extrusion,
ce profilé étant caractérisé en ce que la première matière polymère est thermoplastique et en ce que la seconde matière thermoplastique a une dureté plus élevée que celle de la première matière polymère.

La mise en place du profilé s'effectuera en le disposant au-dessus des plots, avec sa concavité tournée vers ceux-ci, et en exerçant une pression sur le profilé en direction des plots, de manière à écarter l'une de l'autre les tranches du corps à section en C et les lèvres attenantes, pour pouvoir amener librement le corps en contact avec la tête des plots. En supprimant la pression exercée, les arêtes du corps à section en C reviendront à leur position initiale en se rapprochant l'une de l'autre et les lèvres dures du profilé viendront ainsi s'engager au-dessous de la tête des plots, en rendant le profilé solidaire de ceux-ci.

Le corps du profilé pourra être, par exemple, en caoutchouc, notamment en EPDM, d'une dureté SHORE A comprise entre 50 et 80, la dureté pouvant être différente en différents emplacements d'une même section transversale, en fonction de l'effet recherché.

Les lèvres venant se clipser sous la tête des plots seront en un matériau plus dur, d'une dureté au moins égale à 50 SHORE D.

Ces lèvres devront naturellement être en un matériau compatible avec celui constituant le corps du profilé. Elles pourront être, par exemple, en polyéthylène, en polypropylène, en polyamide ou en polyuréthane, seuls ou en divers mélanges mutuels et/ou avec d'autres matières thermoplastiques. On mentionnera notamment le matériau commercialisé sous l'appellation HYTREL (marque déposée), par la Société Dupont de Nemours.

Une armature métallique pourra être noyée dans le corps du profilé pour renforcer se rigidité, mais, si le matériau dont est constitué ce corps est suffisamment rigide, on pourra s'abstenir d'utiliser une telle armature.

Avantageusement, au moins une lèvre souple fera saillie à partir de la surface de la partie du corps destinée à être tournée vers la tête des plots, afin d'être pincée entre cette surface et la tête des plots, après mise en place du profilé sur ceux-ci, et d'éviter ainsi un contact direct entre ces têtes et le corps du profilé.

Comme indiqué ci-dessus, un tel profilé peut comporter sur sa partie externe différents organes d'étanchéité ou d'ornementation, suivant le rôle qui lui est dévolu.

Une forme de réalisation d'un tel profilé va être décrite ci-après plus en détail, à titre d'exemple non limitatif, en référence aux dessins annexés. Sur ces dessins :

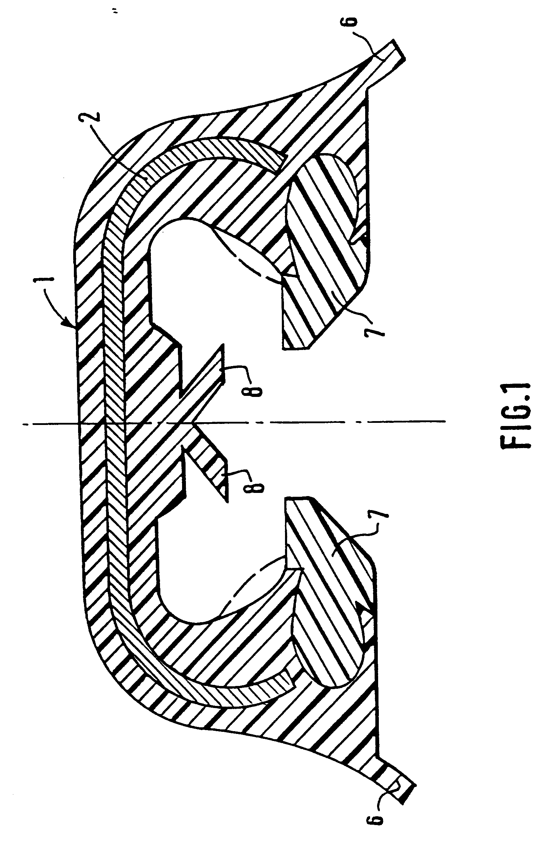

La figure 1 est une coupe transversale du profilé ;
La figure 2 est une vue en coupe illustrant la position du profilé sur des plots soudés sur la surface externe d'une carrosserie d'automobile.

Comme on le voit sur les dessins, dans cette forme de réalisation, le profilé comprend un corps 1, en caoutchouc, qui présente un plan de symétrie. Ce corps 1 présente une section transversale en C, et une armature métallique 2, par exemple en aluminium ou en acier, est noyée dans le caoutchouc du corps 1.

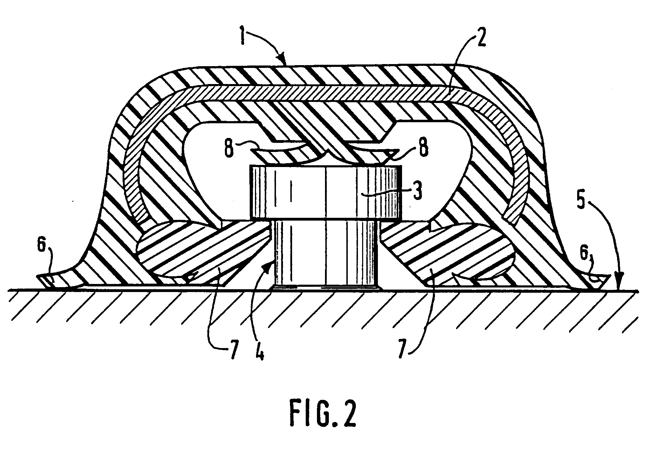

Comme représenté sur la figure 2, ce profilé est destiné à être fixé par clipsage sur la tête 3 de plots 4 à section en T, faisant saillie à la surface d'une carrosserie 5 d'automobile, sur laquelle ils sont soudés, le corps 1 prenant appui contre la carrosserie par des surfaces planes et des lèvres latérales 6.

Dans ce but, deus lèvres dures 7, en un matériau thermoplastique plus dur que le caoutchouc dont est constitué le corps 1, sont attenantes aux bords latéraux du corps du profilé à section en C et font saillie en direction l'une de l'autre au-dessous de la partie centrale du corps C, en une position telle qu'elles puissent venir se clipser sous la tête 3 des plots 4, avec une face plane appliquée contre la face plane inférieure de la tête des plots. Ces lèvres 7 sont coextrudées avec le corps 1 du profilé.

Comme il a été expliqué, pour mettre en place le profilé sur les plots 4, on le dispose au-dessus de ceux-ci avec saconcavité tournée vers la tête 3 des plots, et l'on exerce sur le profilé une pression en direction de la tête des plots. Sous cette pression, les bords latéraux du corps 1 et les lèvres dures 7 attenantes s'écartent l'une de l'autre, et il est possible d'amener la face du profilé tournée vers les têtes des plots en contact avec celles-ci. En relâchant la pression exercée, les bords latéraux du corps 1 et les lèvres 7 reviennent à leur position initiale, et les lèvres 7 viennent se positionner au-dessous des têtes 3 en verouillant ainsi par auto-clipsage le profilé sur ces lèvres.

Afin d'éviter un contact direct et des heurts entre la partie centrale du corps 1 et la tête 3 des plots 4, des lèvres 8 font saillie, à partir de la surface de la partie centrale du corps 1 et la tête des plots, en direction de ceux-ci et, après mise en place du profilé, ces lèvres 8 sont pincées entre le corps 1 et la tête des plots 4, en vue d'éviter tout contact direct entre ceux-ci et d'amortir leurs mouvements relatifs. Ces lèvres 8 absorbent en outre les vibrations et compensent les jeux et les tolérances pouvant exister.

Il est clair que le profilé conforme à l'invention peut être réalisé facilement, par co-extrusion du corps 1 et des lèvres 7. Ces lèvres peuvent naturellement avoir une forme autre que celle représentée sur le dessin.

Ce profilé peut être utilisé dans toutes les applications auxquelles sont destinés les profilés fixés sur les carrosseries, notamment des profilés de double étanchéité, de bas de caisse, de toiture et anti-salissure.

## Revendications

1. Profilé en au moins un matériau polymère, destiné à être fixé par clipsage sur la tête (3) de plots rigides (4) à section en T, en particulier de plots faisant saillie à la surface d'une carrosserie (5) d'automobile, ce profilé comprenant :
- d'une part, un corps (1) en une première matière polymère, ce corps (1) ayant une section en C et étant destiné à coiffer la tête (3) des plots (4), avec la partie concave du C tournée vers les plots, et
- d'autre part, attenantes à chacune des extrémités des tranches du corps (1) à section en C et destinées à faire saillie en direction l'une de l'autre au-dessous de la partie concave du C, en vue d'être engagées sous la tête (3) des plots (4), deux lèvres dures (7) en une seconde matière polymère thermoplastique,
le corps (1) et les deux lèvres dures (7) provenant d'une unique opération de co-extrusion,
ce profilé étant caractérisé en ce que la première matière polymère est thermoplastique et en ce que la seconde matière thermoplastique a une dureté plus élevée que celle de la première matière polymère.

2. Profilé selon la revendication 1, caractérisé en ce que le corps (1) est en caoutchouc, notamment en EPDM, d'une dureté SHORE A comprise entre 50 et 80.

3. Profilé selon l'une des revendications 1 à 2, caractérisé en ce que les lèvres (7) ont une dureté au moins égale à 50 SHORE D.

4. Profilé selon l'une des revendications 1 à 3, caractérisé en de ce qu'une armature métallique (2) est noyée dans la masse du corps (1).

5. Profilé selon l'une des revendications 1 à 4, caractérisé en ce que au moins une lèvre souple (8) fait saillie à partir de la surface de la partie centrale du corps (1) destinée à être tournée vers la tête (3) des plots (4), en vue d'être pincée entre cette surface et la tête des plots après mise en place du profilé sur ceux-ci.

## Claims

1. A profile of at least one polymeric material, for fixing by clipping to the heads (3) of cross-sectionally T-shaped rigid studs (4), in particular studs projecting from the surface of automobile bodywork (5), this profile comprising:
- on the one hand, a body (1) of a first polymeric material, this body (1) having a C-shaped cross-section and being designed to cover the head (3) of a stud (4), with the concave portion of the C facing the stud, and
- on the other hand, adjoining each of the ends of the side pieces of the cross-sectionally C-shaped body (1) and designed to project towards one another below the concave portion of the C, with a view to engaging under the head (3) of the stud (4), two hard lips (7) of a second thermoplastic polymeric material,
the body and the two hard lips (7) being formed in a single co-extrusion operation,
this profile being characterised in that the first polymeric material is thermoplastic and in that the second thermoplastic material is harder than the first polymeric material.

2. A profile according to claim 1, characterised in that the body (1) is of rubber, in particular EPDM, of a Shore A hardness of between 50 and 80.

3. A profile according to either one of claims 1 and 2, characterised in that the lips (7) exhibit a hardness at least equal to 50 Shore D.

4. A profile according to any one of claims 1 to 3, characterised in that a metallic reinforcement (2) is embedded in the mass constituting the body (1).

5. A profile according to any one of claims 1 to 4, characterised in that at least one flexible lip (8) projects from the surface of the central portion of the body (1) and is designed to face the head (3) of the stud (4) with a view to being squeezed between said surface and the head of the stud after the profile is positioned thereon.

## Patentansprüche

1. Profilelement aus mindestens einem Polymermaterial, das dazu bestimmt ist, durch Aufklipsen auf dem Kopf (3) von T-förmigen festen Stiften (4) befestigt zu werden, insbesondere Stiften, die gegenüber der Oberfläche einer Fahrzeugkarosserie (5) vorspringen, wobei das Profilelement folgendes aufweist:
- einerseits einen Körper (1) aus einem ersten Polymermaterial, wobei der Körper (1) einen C-förmigen Querschnitt aufweist und dazu bestimmt ist, den Kopf (3) der Stifte (4) mit dem konkaven Teil des C, der den Stiften zugewandt ist, abzudecken, und
- andererseits zwei harte Lippen (7) aus einem zweiten thermoplastischen Polymermaterial, die an jedes Ende der Abschnitte des C-förmigen Körpers (1) angrenzen und dazu bestimmt sind, in Richtung der einen zur anderen unterhalb des konkaven Teils des C vorzuspringen, um unter dem Kopf (3) der Stifte (4) in Eingriff zu gelangen,
wobei der Körper (1) und die beiden harten Lippen (7) über eine gemeinsame Koextrusion hergestellt sind,
wobei das Profilelement dadurch **gekennzeichnet**
ist, daß das erste Polymermaterial thermoplastisch ist und daß das zweite thermoplastische Material eine Härte aufweist, die größer ist als diejenige des ersten Polymermaterials.

2. Profilelement nach Anspruch 1, dadurch gekennzeichnet, daß der Körper (1) aus Kautschuk, insbesondere aus EPDM, mit einer Härte SHORE A zwischen 50 und 80 besteht.

3. Profilelement nach einem der Ansprüche 1 bis 2, dadurch gekennzeichnet, daß die Lippen (7) eine Härte von größer gleich 50 SHORE D aufweisen.

4. Profilelement nach einem der Ansprüche 1 bis 3, dadurch gekennzeichnet, daß eine Metallarmierung (2) in der Körpermasse (1) eingebettet ist.

5. Profilelement nach einem der Ansprüch 1 bis 4, dadurch gekennzeichnet, daß mindestens eine weiche Lippe (8) von der Oberfläche des Mittelteils des Körpers (1) vorspringt, die dazu bestimmt ist, dem Kopf (3) der Stifte (4) zugewandt zu sein, um zwischen dieser Oberfläche und dem Kopf der Stifte nach der Anordnung des Profilelements auf diesen eingeklemmt zu sein.
